# EUROPEAN PATENT APPLICATION

(11) **EP 1 584 229 A1**
(43) Date of publication of application: **12.10.2005**
(21) Application number: 05075746.7
(22) Date of filing: 31.03.2005
(51) Int. Cl.: A01G 9/00

(54) **Method for growing plants**

(30) Priority: 06.04.2004 NL 1025889; 14.09.2004 NL 1027041
(71) Applicant: Van der Stoep, Cornelis Johannes, 2661 GP Bergschenhoek (NL)
(72) Inventor: Van der Stoep, Cornelis Johannes, 2661 GP Bergschenhoek (NL)
(74) Representative: Brookhuis, Hendrik Jan Arnold

(57) **Abstract**

Method for growing cut flower plants, in particular anthuriums for cutting, in which each root container forms a space for accommodating the root cluster, and in which method use is furthermore made of root container carriers on which in each case one or more root containers are arranged, each root container resting on the root container carrier with its supporting formation.

The vertical distance between the base element and the top edge of the root container can be adjusted with each root container.

The method comprises a distance-increasing operation at least once during the life of a plant, during which the vertical distance between base element and the top edge of the container is increased, in such a manner that a plant is kept in a root container for a certain period, while the base element thereof is located at a vertical distance to the top edge associated with this period, following which the vertical distance of the base element to the top edge is increased to a greater vertical distance associated with a next period, the root cluster being kept or brought near the base element, as a result of which an open space is created above the root cluster in the root container, which open space is optionally filled at least partially with additional substrate, which is then available during this next period for root growth.

## Description

The present invention relates to growing plants, in particular cut flower plants, such as cut anthuriums. Anthuriums for cutting are grown on a large scale in greenhouses for their graceful flowers and leaves.

In a well-known method for growing anthuriums for cutting, each plant has its own pot comprising a base, peripheral wall and open top. Along the top of the peripheral wall, each pot has an outwardly protruding peripheral flange. The root cluster of the anthurium is inside the pot. In the greenhouse, elongated racks are arranged on the ground, each rack having a series of openings at the top and a pot suspended in an opening. In this case, the pot rests on the rack by means of its outwardly protruding peripheral flange. The racks are usually metal racks made of bar members, for example having inverted U-shaped uprights which are placed at a distance from one another in the longitudinal direction of the rack, and having horizontal connecting bars which connect the uprights with one another.

Usually a path is provided between the racks with pots so that staff can harvest the flowers and take care of and inspect the plants.

In the prior art, another method for growing cut anthuriums is also known. With this known method, the racks are designed such that a pot can optionally rest on the top of the rack with its base or with a supporting formation which is provided near the top edge of the pot. While the plant is small and the stem short, the pot is placed on the top of the rack with its base. Later, when the stem has become longer and the plant therefore taller, the pot is lowered, in such a manner that the supporting formation of the pot rests on the top of the rack. This known method aims to bring the plant, and in particular the flower component to be harvested, to a lower height when the plant has grown in order to facilitate the work in the greenhouse.

It is an object of the present invention to provide an improved growing method for plants, in particular for cut flower plants but also for plants having edible plant components.

To this end, the present invention provides a method according to claim 1. This method according to the invention is particularly suitable for growing anthuriums for cutting, but its use in, for example, growing tomatoes and monsteras (such as monstera deliciosa; an edible fruit) is also provided for.

When used for growing anthuriums, the invention thus provides for the root cluster to be lowered relative to the top edge of the root container carrier once or several times during the life of the anthurium (which, in practice, may be 5 years, for example), and thus - if the root container carrier is at a fixed height with respect to a path - relative to the path. In addition, in a suitable embodiment of the method according to the invention, additional substrate is introduced into the root container on top of the root cluster which is already present. The plant will grow roots in this new substrate as well, in particular through the stem part which is in the additional substrate forming side shoots. This effect is very advantageous for growing, particularly as the effective stem length between the root cluster and the flower/leaf to be harvested is thus reduced. Examples of substrates which may be used are oasis, perlite and rockwool.

In a possible variant of the method according to the invention, which is particularly suitable for plants with air roots, such as for example anthuriums, provision can be made for no or hardly any substrate to be used. The roots then grow in the root container and can for example grow downwards through openings in or along the base element. Any roots which protrude too far below the root container can then be cut off. In this embodiment, the root cluster is likewise lowered at suitable points in time relative to the top edge of the root container.

Preferably, each plant has a separate root container, but it is also conceivable for a number of plants to be placed in one root container. In this context, it should be noted that, with some anthuriums, one plant quickly forms a number of stems which gives the impression that there are two or more plants in the root container.

The invention furthermore provides for the method to be used in a situation where the root containers with plants are not stationary in one location (and are harvested there by staff walking over a path, etc.) but can be moved, for example by (pairs of) plant container(s) or by rack. Provision can be made, for example, for plant containers to be moved from a growing location to a harvesting location in order to be harvested there. The growing method used is advantageous in that location as well, for example with regards to the height of the flowers/fruits to be harvested, which can be more uniform and lower than with the known methods. Even when harvesting takes place in an automated fashion, these are attractive advantages. It would also be possible to move plants to an inspection location in order to follow the development of the plant (automatically) or, for example, to a location where plants of a particular development stage are grouped together, for example all the plants which have just been harvested being placed together under optimum conditions.

Preferably, the distance-increasing operation is repeated a number of times during the life of the plant, for example once a year or once every two years, or after each harvest or at other times. Of course, this is dependent on the height development of the plant.

Preferably, the distance-increasing operation is performed in such a manner that the root cluster of the cut flower plant remains in the root container.

In practice, it is advantageous if the root containers carriers keep the supporting formations of the root containers at a predetermined height with respect to the ground, in particular with respect to a path on said ground. In this case, the height is preferably such that a number of distance-increasing operations are possible during the life of the plant. This is advantageous with regard to the activities of the staff tending the plants and possibly carrying out harvesting, and may also be advantageous with regard to aspects such as plant growth, lighting, etc.

In an embodiment which is advantageous from a practical point of view, in particular for growing anthuriums for cutting, the height of the root container carrier is such that the top edge of the root containers is 30 centimetres to 100 centimetres above the ground, advantageously at a height of between 40 and 70 centimetres, for example approximately 50 centimetres.

In a particular variant of the method according to the invention, provision is made for a bottom part of the root cluster of the plant to be removed after one or preferably more distance-increasing operations. This is likewise preferably carried out without removing the root cluster (in particular the part which remains) from the root container. This step is based on the insight that the height of the root cluster may eventually develop to such a degree that the root cluster becomes undesirably large and thus negatively affects the growth of the plant. The root cluster becoming too large may also be problematic from a practical point of view, for example because the base element of the root container has reached its lowest position.

The root container may have a peripheral tube wall provided with a number of openings at different heights, so that the base element can be placed in the tube through each of these openings.

The base element may comprise a plate part which can be inserted into corresponding substantially horizontal slot openings in the peripheral tube wall. At its front insertion edge, the plate part may be provided with a cutting edge in order to cut off a bottom part of the root cluster.

Optionally, provision is made for a flexible separating layer to be placed between the root cluster and at least the peripheral wall of the root container, if desired also between the root cluster and the base element. The flexible separating layer is, for example, a sheet, preferably a plastic sheet.

The invention furthermore relates to a root container designed and intended for carrying out the method according to the invention.

For example, provision is made for a root container for growing plants, in particular cut flower plants, comprising a tube which is open at the top and can be positioned substantially vertically, having a peripheral tube wall and a top edge and having a base element which can be displaced vertically relative to the tube wall within a range, the peripheral tube wall preferably being provided with a plurality of openings at different heights, so that the base element can be placed in the tube through each of these openings, the base element preferably comprising a plate part which can be inserted into corresponding, substantially horizontal slot openings in the peripheral tube wall.

The invention furthermore relates to an assembly of root container and root container carrier designed and intended for carrying out the method according to the invention.

The invention furthermore relates to a greenhouse designed and intended for carrying out the method according to the invention.

The invention will be explained below in more detail with reference to a drawing, which shows a non-limiting example of the growing method and a growing system according to the invention which can be used with it, in which:
Fig. 1 shows a side view of an exemplary embodiment of a growing system for carrying out the method according to the invention;
Fig. 2 shows a top view of the growing system of Fig. 1;
Figs. 3a, b show a side view and a top view of the rack of the growing system of Figs. 1 and 2;
Figs. 4a, b, c show side views and a top view, respectively, of the tube of the growing system of Figs. 1 and 2;
Figs. 5a, b, c show a top view, a side view and a detail on an enlarged scale of the base element of the growing system of Figs. 1 and 2;
Figs. 6a, b diagrammatically show a root container according to the invention;
Fig. 7a diagrammatically shows a rack for root containers according to the invention;
Fig. 7b shows the rack of Fig. 7a with root containers suspended in it.

The method for growing a large number of plants according to the invention, in this example anthuriums for cutting, will be explained with reference to the drawing.

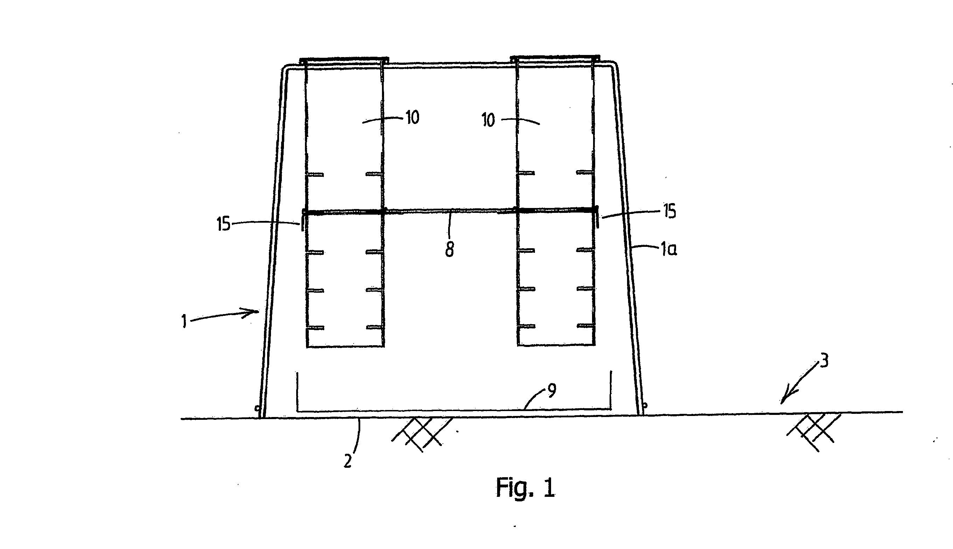

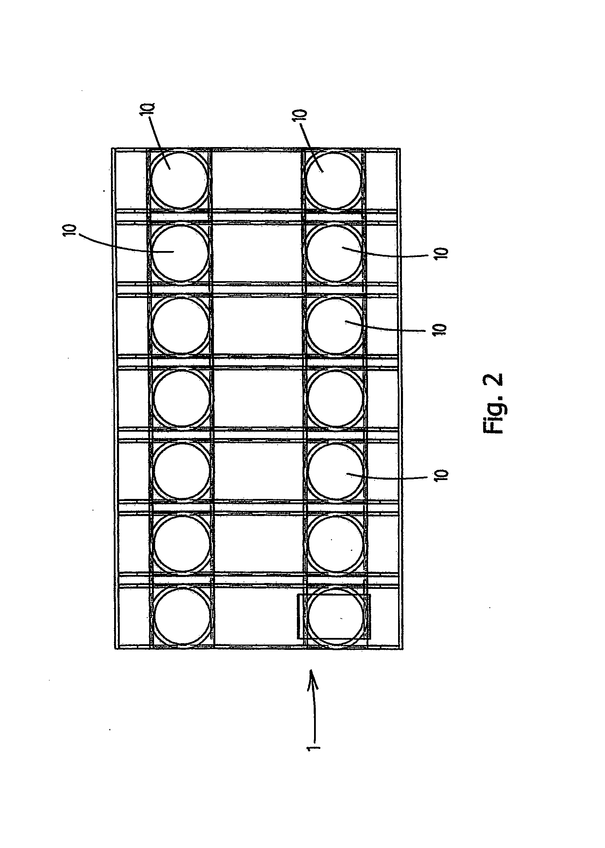

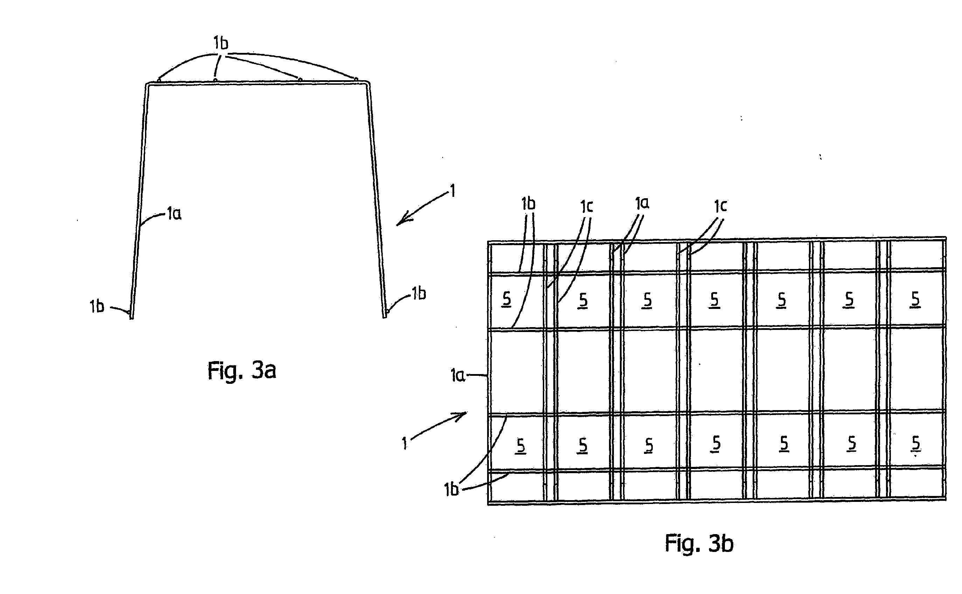

Figs. 1, 2 and 3a, b illustrate a root container carrier designed as an elongated metal rack 1, which is placed on the ground 2 of a suitable greenhouse (not shown). A path 3 extends next to the rack 1, on which path staff can walk.

Viewed in vertical section, the rack 1 is substantially inversely U-shaped and in this case constructed from spaced-apart inverted U-shaped wire component uprights 1a in the longitudinal direction of the rack 1, and horizontal connecting elements 1b which extend in the direction of the rack and connect the uprights to one another. Additional transverse bars 1c in the top of the rack 1, together with the elements 1b form one or more adjacent rows of openings 5 into which root containers 10 which are to be described in detail can be placed. In this case, the openings 5 are insertion openings for inserting the root containers 10 into the rack 1 from above.

As will be explained in more detail, the elements 1b, 1c of the rack 1 form supporting surfaces for the supporting formations of the root containers 10 which have been placed in the rack 1 to rest on.

For stability, provision is made for an intermediate rack 8 having the same pattern of openings 5 for the tubes 10. This intermediate rack 8 is located at a distance below the top of the rack 1 and in this example rests on protruding parts of base elements 15 to be explained in more detail.

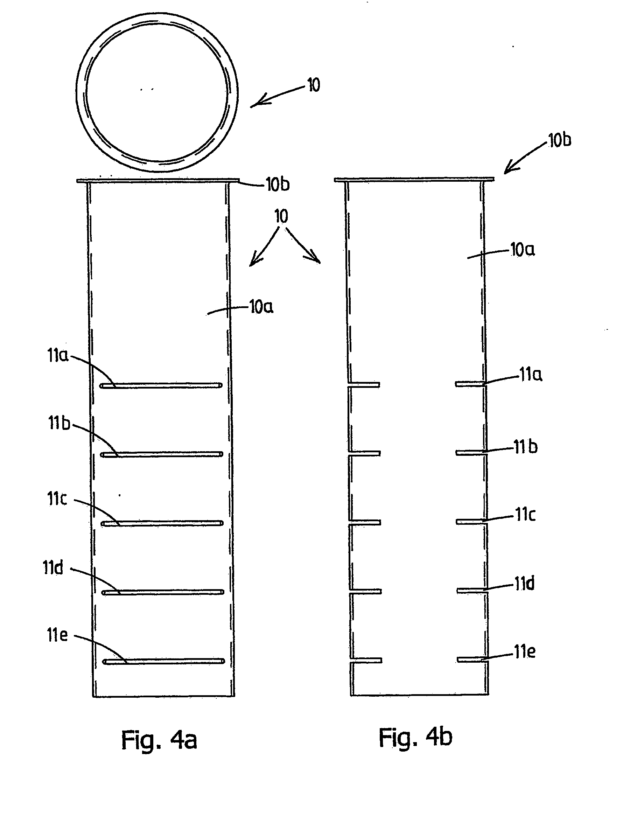

The embodiment of the root containers 10 used here will now be explained in more detail with reference to Figs. 1, 4a-c and 5a-c.

Each root container 10 has a peripheral wall in the shape of a tube which is open at the top and can be positioned substantially vertically, having a peripheral tube wall 10a and a top edge 10b.

The tube 10 is, for example, essentially made from an extruded plastic pipe, for example a PVC pipe.

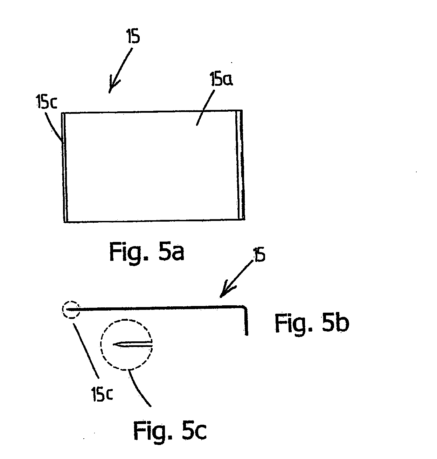

The peripheral tube wall 10a is provided at different heights with a number of slot openings 111a-e, so that the base element 15 (see Fig. 5) can be placed in the tube 10 through each of these slot openings 11a-e. In this example, in each case two slot openings are positioned diametrically opposite one another, so that the base element 15 extends through the tube 10.

It will be clear that the base element could also be designed as a kind of piston, which can be displaced inside the tube, for example using an operating projection which projects through a slot in the peripheral wall of the tube or at the bottom (preferred embodiment) or top of the tube.

The base element 15 comprises a plate part 15a which can in each case be inserted through one of the corresponding, substantially horizontal slot openings 11a-e in the peripheral tube wall 10a. In this manner, a vertical displacement of the base element 15 relative to the tube wall 10a within a range can be achieved.

The plate part 15 is in this case provided with a cutting edge at its front insertion edge 15a for cutting off the bottom part of the root cluster, as will be explained below in more detail.

At the top, the tube 10 has an outwardly protruding peripheral flange 10c which forms a supporting formation with which the tube 10 rests on the elements 1b, 1c of the rack which together form an insertion opening 5 for the tube 10. It will be clear that instead of a flange 10c, another supporting formation part can be fitted to the tube 10, likewise at a height under the top edge of the tube. Preferably, as in this example, the supporting formation is at a fixed height relative to the top edge of the tube.

The rack 1 thus keeps the flange 10c of the tube 10 at a predetermined height relative to the ground 2, in particular the path 3. The height of the rack 1 is, for example, between 40 and 60 centimetres.

When growing anthuriums for cutting, for example, the grower can place each of the still relatively young anthuriums in a tube 10 first, the base element 15 having been inserted in the top slot 11a and the root cluster of the anthurium thus being spatially delimited by the peripheral wall 10a and the base element 15. The root system, for example, grows in an oasis substrate. The plant stem (or stems) protrude upwards through the opening at the top of the tube 10, which is delimited in this case by the top edge 10b.

The flowers and/or leaves and/or fruits of the plants in the tubes 10 may be harvested. In order to water the plants, provision is made, for example, for a water supply to each separate root container 10. Preferably, the water supply is designed for supplying water to the top of the root cluster, for example a drip watering system. For example, a pin with a dripper is inserted at the top of each root cluster. In Fig. 1 a water collecting and supply feature 9 can be seen which extends under the root containers 10, in this case in the direction of the rack. The feature may be a drainpipe (for example made of plastic) or for example comprise a sheet which is arranged under the root containers. The water can be recycled.

The distance between the bottom of the tubes 10 and the water collector 9 is, for example, more than 5 centimetres.

In the system shown, the vertical distance between the base element 15 and the top edge 10c of the root container 10 can be adjusted in discrete stages by inserting the base element 15 into another slot opening 11a-e.

The invention provides for a distance-increasing operation to take place at least once during the life of a plant, during which the vertical distance between base element 15 and top edge 10c of the root container 10 is increased. This is done in this case, for example, by removing the base element from the slot opening 11a and reinserting it in the slot opening 11b underneath.

A plant is thus kept in a tube 10 for a certain period, while the base element 15 thereof is located at a vertical distance to the top edge associated with this period (for example in slot opening 11a), following which the vertical distance of the base element 15 to the top edge 10c is increased to a greater vertical distance associated with a next period (for example in slot opening 11b). The root cluster is in this case kept or brought near the base element 15. In practice, the root cluster will be pressed down as it is stuck in the tube 10. This results in an open space above the root cluster in the root container, which open space is filled at least partially with additional substrate (for example pieces of oasis), which is then available during this next period for root growth.

It will be clear that the above-described operation can be repeated a number of times with the tube 10. This distance-increasing operation is carried out while the root cluster remains in the tube 10, so that the operation can be carried out quickly and without damaging the root cluster.

The distance-increasing operation is, for example, repeated a number of times during the life of the plant, for example periodically (such as annually or after one or more harvests) or for example dependent on a detection of the plant's growth.

The lowering of the root cluster relative to the top edge of the tube 10 and thus relative to the rack 1 and ground 2, results in the height of the flowers and/or leaves to be harvested relative to the rack 1 and thus relative to the path 3 not undergoing an undesired increase. Moreover, it is significant that additional substrate is added on top of the existing root cluster so that the effective stem length of the plant is shortened, in particular when the stem forms side shoots in the additional substrate, as is the case with anthuriums for cutting.

The option of removing the bottom part of the root cluster of the plant after one or preferably more distance-increasing operations is provided for. This may be carried out in this case by means of the cutting edge 15c which is formed on the base element 15, but other methods are obviously also conceivable.

The tubes 10 are in this example adapted to anthuriums for cutting.

These plants, and other types of plants, have one or more stems which, during each period of growth, develop a node in the stem or a node distance above the previous node associated with this type of plant. With the distance-increasing operation as described here, an increase in the vertical distance is achieved in each case which substantially corresponds to this node distance and which in practice is often between 5 and 10 centimetres.

The invention thus also provides a root container which is designed for an increase in vertical distance between the base element and the top edge in one or more discrete stages, for example in stages of between 5 and 10 cm.

When the roots grow, they may form such an attachment to the peripheral wall 10a of the tube 10 that it becomes difficult to lower the root cluster. Therefore, a flexible separating layer may be provided between the root cluster and the at least one peripheral wall of the root container, if desired also between the root cluster and the base element. The flexible separating layer is, for example, a sheet, preferably a plastic sheet.

In a variant which is not shown, the tube 10 has a diameter which is not uniform across its height, but has, for example, a conical shape which widens towards the bottom or has a shape which widens towards the bottom in a stepped manner.

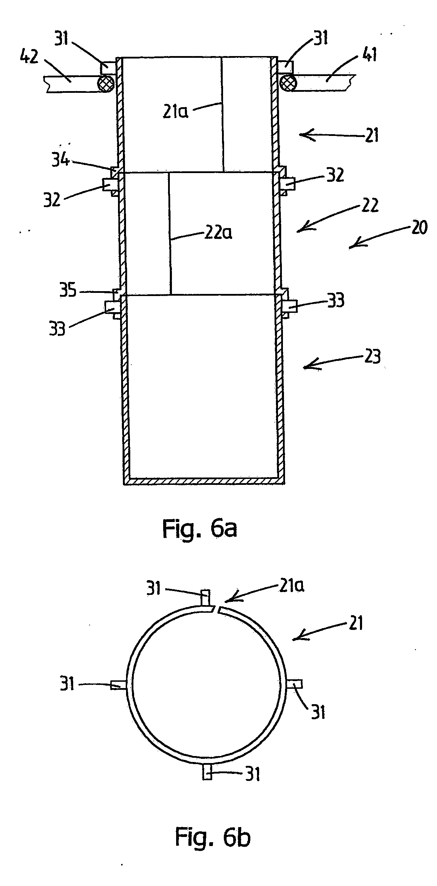

In a version shown diagrammatically in Figs. 6a, b, the root container 20 has a peripheral wall which can be constructed from a number of annular segments 21, 22, and in this case interact with a base part 23. The annular segments 21, 22 are preferably identical and, if desired, the height of the root container 20 can be increased by fitting still more annular segments 21, 22 to the root container 20. In this manner, the abovementioned distance-increasing operation is then achieved.

In the illustrated example, each annular segment 21, 22 is provided with an open seam 21a, 22a so that an annular segment 21, 22 can be opened up and arranged around the stem of the plant which is already in the root container 20. An annular segment could also be composed of a number of parts, which are connected to one another in the circumferential direction.

Interacting fastening means are provided in order to fit the annular segments 21, 22 and in this case the base part 23 to one another. This has been achieved in this case, by way of example, by providing each annular segment 21, 22 and the base part 23 along their top edge with outwardly protruding cams 31, 32, 33. These cams 31, 32, 33 interact with a coupling edge 34, 35 integrally formed at the bottom of each annular segment 21, 22, for example as a kind of bayonet fastening.

The annular segments 21, 22 (and base part 23) are, for example, made of plastic by injection-moulding in a suitable mould.

It can be seen from Fig. 6a that the cams 31, 32, 33 may also serve as supporting formations for supporting the root container 20 on a rack, in this case rack bars 41, 42. It will be clear that the annular segments could also be provided with other supporting formations for this purpose, for example a supporting shoulder or supporting flange running round the annular segment.

When the distance-increasing operation is performed on the root container 20, a new annular segment 21, 22 is preferably fitted on top of the root container 20 and the space around the stem filled with substrate. In addition, the root container 20 is then lowered with respect to the rack 41, 42 so that the cams 31 of the top annular segment 21 come to rest on the rack.

In order to facilitate opening each annular segment 21, 22 at the open seam 21a, 22a, a hinge formation could be provided, for example diametrically opposite the open seam and for example formed by a relatively thin band in the (plastic) wall of the annular segment.

In another example, the annular segments of the root container are coaxial and telescopically displaceable relative to one another, so that the annular segments are displaced with respect to one another during the distance-increasing operation in order to increase the distance between the base element and the top edge. For example, relative to the top ring which rests on the rack 1, in each case one or more of the other rings are lowered.

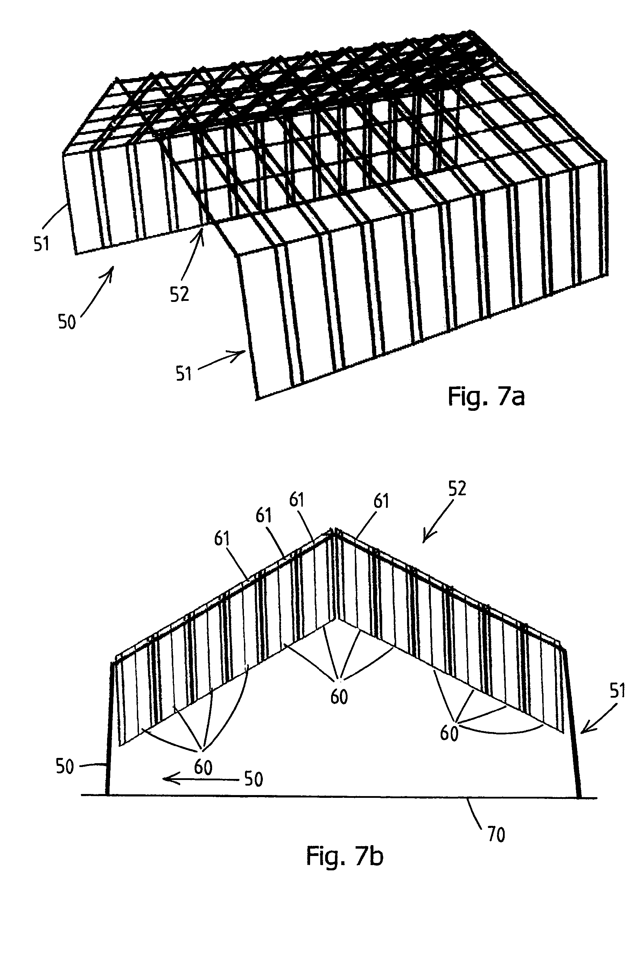

Figs. 7a, b show a rack 50 to be placed on the ground 70, for example in a greenhouse, having side parts 51 and top part 52. The top part 52 is provided with insertion openings 53 for root containers 60, for example having a tubular peripheral wall.

The rack 50, in particular the top part 52, is designed such that the root containers 60 resting on the rack, here in a stepped arrangement of adjacent root containers, are supported at different heights relative to the ground, for example in each case one step higher when viewing the rack from the side. In this example, the top part 52 is provided with a "roof shape" or "inverted V-shape", so that the root containers nearer the centre of the rack 50 are in each case in a higher position than neighbouring root containers placed nearer to a side part.

By arranging the root containers 60 at different heights in the rack 50, a relatively larger growing surface is obtained for the plants than when the plants are arranged on a flat surface, as was customary hitherto. Furthermore, the lighting of the plants is improved while advantages relating to the growth are achieved at the same time. It will be clear that the arrangement in a rack 50 of this type may also be advantageous with traditional growing methods, such as for anthuriums, where no distance-increasing operation, such as the one explained here, is carried out.

The root containers 60 may be placed in the rack 50 in a "chess board" arrangement, so that the containers 60 are in diagonal rows with open spaces between them. This arrangement is also advantageous for the growth of the plants.

In the embodiment shown, the root containers 60 have an inclined top edge 61, which in this case also serves as supporting edge for hanging the root containers 60 in the rack 50.

The root containers 60 are preferably provided with a height-adjustable base element, just like the above-described root containers, optionally with openings provided therein or between the base element and the tube wall through which water and/or roots may pass.

A base element may also be designed in the form of a ring (optionally with a partial seam) provided with inwardly directed projections on which the root cluster rests, with roots being able to grow below the base element if required. A similar kind of ring could also be placed against the top of the root cluster, for example for holding the stem upright.

Provision may also be made for positioning formations, for example a circular edge, at different heights in the root container in order to position a base element with respect to the root container.

The growing system discussed above is also particularly suitable for growing tomatoes and for growing monsteras (such as monstera deliciosa; an edible fruit).

## Claims

1. Method for growing plants, in particular cut flower plants, such as cut anthuriums,
in which method a root cluster of a plant is accommodated in a root container (10), optionally with a suitable substrate,
each root container forming a space for accommodating the root cluster, the root container having a peripheral wall (10a) with a top edge (10c), which delimits an opening of the root container at the top through which one or more plant stems of the plant protrude upwards,
which root container has a base element (15) at a vertical distance below the top edge for supporting the root cluster from below,
the root container furthermore having a supporting formation (10c), which is at a substantially constant vertical distance relative to the top edge of the root container,
in which method use is furthermore made of root container carriers (1) which each carry one or more root containers, each root container resting on the root container carrier with its supporting formation (10c),
plant parts being harvested,
**characterized in that** the vertical distance between the base element (15) and the top edge (10c) of the root container can be adjusted,
which method comprises a distance-increasing operation at least once during the life of a plant, during which the vertical distance between base element and the top edge of the container is increased, in such a manner that a plant is kept in a root container for a certain period, while the base element thereof is located at a vertical distance to the top edge associated with this period, following which the vertical distance of the base element to the top edge is increased to a greater vertical distance associated with a next period, the root cluster being kept or brought near the base element, as a result of which an open space is created above the root cluster in the root container, which open space is optionally filled at least partially with additional substrate, which is then available during this next period for root growth.

2. Method according to claim 1, in which the distance-increasing operation is repeated a number of times during the life of the plant, for example periodically (such as annually or after one or more harvests) or for example dependent on a detection of the plant's growth, a bottom part of the root cluster of the plant being removed, if desired after one or preferably more distance-increasing operations.

3. Method according to one or more of the preceding claims, in which the peripheral wall of the root container has an outwardly protruding supporting formation, for example a peripheral flange.

4. Method according to one or more of the preceding claims, in which the root container has a peripheral wall in the shape of a tube which is open at the top - and preferably at the bottom as well - and can be positioned substantially vertically, having a peripheral tube wall and a top edge and a height such that the base element can be displaced vertically relative to the tube wall within a range.

5. Method according to one or more of the preceding claims, in which the root container carriers keep the supporting formations of the root containers at a predetermined height relative to the ground, in particular a path, the root container carrier preferably being designed to be placed on the ground, for example in a greenhouse.

6. Method according to claim 5, in which the root container carrier is an elongated rack having a top, which rack is provided with openings, preferably arranged in one or more rows, for root containers, which rack forms supporting surfaces for the supporting formations of the root containers which have been placed in the rack to rest on, the openings preferably being insertion openings for inserting the root containers into the rack from above.

7. Method according to claim 6, in which the rack is constructed from bar members, for example from inverted U-shaped or roof-shaped wire elements which serve as uprights and are placed at a distance from one another in the longitudinal direction of the rack, and horizontal connecting elements which extend in the longitudinal direction of the rack and connect the uprights to one another.

8. Method according to one or more of the preceding claims, in which a water supply is furthermore provided, preferably for each separate root container, for example for supplying water to the top of the root cluster, for example a drip watering system, preferably with a water collecting feature extending under the root containers, for example a drainpipe.

9. Method according to one or more of the preceding claims, in which the root container has a peripheral wall which is composed of or can be composed of a number of annular segments, the annular segments of the root container for example being coaxial and telescopically displaceable relative to one another, so that the annular segments are displaced with respect to one another during the distance-increasing operation in order to increase the distance between the base element and the top edge, or it being possible to fit one or more annular segments to another annular segment so that an additional annular segment is fitted to the root container during the distance-increasing operation.

10. Growing system for carrying out the method according to one or more of the preceding claims.
